# EUROPÄISCHE PATENTANMELDUNG

(11) **EP 4 456 367 A1**
(43) Veröffentlichungstag der Anmeldung: **30.10.2024**
(21) Anmeldenummer: 23170637.5
(22) Anmeldetag: 28.04.2023
(51) Int. Cl.: H02J 3/14, H01R 13/00, H02J 13/00

(54) **ELEKTRISCHES/ELEKTRONISCHES INSTALLATIONSGERÄT, SYSTEM UND VERFAHREN ZUR NETZSTABILISIERUNG UND/ODER NUTZUNG EINES NIEDERTARIFSTROMTARIFS**

(71) Anmelder: Albrecht Jung GmbH & Co. KG, 58579 Schalksmühle (DE)
(72) Erfinder: Biniossek, Nik, 58099 Hagen (DE); Jeske, Stefan, 58553 Halver (DE); Jörgens, Stefan, 58579 Schalksmühle (DE)
(74) Vertreter: Fobbe, Tobias

(57) **Zusammenfassung**

Zu dem Zweck, eine optisch unauffällige technische Lösung zu schaffen, die es einerseits erlaubt, dass Haushaltsgeräte kostenoptimiert betrieben werden können, indem ein Niedertarifstromtarif genutzt wird, und andererseits ermöglicht, dass Haushaltsgeräte lastspezifisch einen Beitrag zur Netzstabilität leisten können, wird ein elektrisches/elektronisches Installationsgerät 1 der Gebäudeinstallationstechnik zum Einbau in eine Installationsdose zur Netzstabilisierung und/oder Nutzung eines Niedertarifstromtarifs vorgeschlagen, wobei dass das elektrische/elektronische Installationsgerät 1 eine Rundsteuersignalauswerteinheit D und eine Steuereinheit R zur Lastregelung mindestens eines an das elektrische/elektronische Installationsgerät 1 angeschlossenen Verbrauchers aufweist, wobei die Lastregelung anhand eines durch die Rundsteuersignalauswerteinheit D empfangenen und ausgewerteten Rundsteuersignals SIG erfolgt.

## Beschreibung

Die Erfindung betrifft ein elektrisches/elektronisches Installationsgerät der Gebäudeinstallationstechnik zum Einbau in eine Installationsdose zur Netzstabilisierung und/oder Nutzung eines Niedertarifstromtarifs.

Die Erfindung betrifft ferner ein System mit einem solchen elektrischen/elektronischen Installationsgerät sowie ein Verfahren zur Netzstabilisierung und/oder Nutzung eines Niedertarifstromtarifs mit einem solchen elektrischen/elektronischen Installationsgerät.

Durch die weit verbreitete Rundsteuertechnik wird eine Fernsteuerung von Lasten über das Stromversorgungsnetz durch Energieversorgerunternehmen vorgenommen. Dieses umfasst beispielsweise das Umschalten einer mit Strom betriebenen Heizungsanlage auf einen Niedertarifstromtarif.

Energieversorger können ebenfalls vorschreiben, dass Ladeinfrastruktur, insbesondere zum Laden eines Elektroautos, mittels eines Rundsteuersignals geregelt bzw. abgeschaltet werden kann. Dies ermöglicht dem Energieversorger bei unverhältnismäßig hoher Netzlast große Leistungsaufnahmen aus der Ferne abzustellen und so einen Beitrag zur verbesserten Netzstabilität zu leisten. Derartige Ladestationen sind beispielsweise aus WO 2021 228 587 A1 bekannt.

Typische Verbraucher im Haushalt, nachfolgend Haushaltsgeräte genannt, wie Geschirrspülmaschinen, Waschmaschinen, Kühlschränke, Trockner, Gefrierschränke, Beleuchtungseinrichtungen und dergleichen können gegenwärtig keinen Beitrag zur Netzstabilisierung leisten, obwohl sie nicht unerhebliche Spitzenlasten von teilweise weit über 2000 W Leistungsaufnahme aufweisen. Ebenfalls besteht auch keine technisch praktikable Lösung, einen Niedertarifstromtarif für den Betrieb der vorstehenden Geräte zu nutzen und auf diesem Wege einen kostenoptimierten Betrieb der Haushaltsgeräte vorzunehmen.

Ausgehend von diesem diskutierten Stand der Technik liegt der Erfindung die Aufgabe zugrunde, eine optisch unauffällige technische Lösung zu schaffen, die es einerseits erlaubt, dass Haushaltsgeräte kostenoptimiert betrieben werden können, indem ein Niedertarifstromtarif genutzt wird, und andererseits ermöglicht, dass Haushaltsgeräte lastspezifisch einen Beitrag zur Netzstabilität leisten können.

Gelöst wird diese Aufgabe durch ein elektrisches/elektronisches Installationsgerät der Gebäudeinstallationstechnik zum Einbau in eine Installationsdose zur Netzstabilisierung und/oder Nutzung eines Niedertarifstromtarifs, wobei das elektrische/elektronische Installationsgerät eine Rundsteuersignalauswerteinheit und eine Steuereinheit zur Lastregelung mindestens eines an das elektrische/elektronische Installationsgerät angeschlossenen Verbrauchers aufweist, wobei die Lastregelung anhand eines durch die Rundsteuersignalauswerteinheit empfangenen und ausgewerteten Rundsteuersignals erfolgt.

Der Kerngedanke der Erfindung besteht darin, dass das erfindungsgemäße elektrische/elektronische Installationsgerät dazu in der Lage ist, einen Beitrag zur Netzstabilisierung und/oder Nutzung eines Niedertarifstromtarifs zu leisten, wobei das erfindungsgemäße elektrische/elektronische Installationsgerät in einer Installationsdose angeordnet, mithin optisch unauffällig ist. Hierzu umfasst das elektrische/elektronische Installationsgerät eine Rundsteuersignalauswerteinheit und eine Steuereinheit zur Lastregelung mindestens eines an das elektrische/elektronische Installationsgerät angeschlossenen Verbrauchers, wobei die Lastregelung anhand eines durch die Rundsteuersignalauswerteinheit empfangenen und ausgewerteten Rundsteuersignals erfolgt. Ferner bietet ein solches erfindungsgemäßes elektrisches/elektronisches Installationsgerät den zusätzlichen Vorteil, dass es - durch die Lastregelung mindestens eines an das elektrische/elektronische Installationsgerät angeschlossenen Verbrauchers - lastspezifisch einsetzbar ist (und nicht den gesamten Hausanschluss "deaktiviert"). Durch die vorbeschriebenen optischen und funktionalen Vorteile wird die Akzeptanz beim Anwender spürbar verbessert.

Gemäß einer besonders bevorzugten Ausgestaltung des elektrischen/elektronischen Installationsgerätes ist das elektrische/elektronische Installationsgerät ein Funktionsmodul zum Einbau hinter ein bestehendes elektrisches/elektronisches Installationsgerät der Gebäudeinstallationstechnik, insbesondere ein Schalter, Taster oder eine Steckdose. Hierdurch wird vorteilhafterweise ein, regelmäßig unerwünschtes, da kostenintensives, Austauscherfordernis bestehender elektrischer/elektronischer Installationsgeräte wie Schalter, Taster oder Steckdosen wirksam vermieden, so dass die Akzeptanz beim Anwender spürbar verbessert wird. Ökonomisch betrachtet bietet eine solche Ausgestaltung ferner ein besonders attraktives Preis-Leistungsverhältnis, da die Amortisationszeit durch die Vermeidung des Austausches bestehender elektrischer/elektronischer Installationsgeräte signifikant abgesenkt wird, da das Anfangsinvestment geringer ausfällt. Zudem bleibt die Einheitlichkeit der Optik der bereits verbauten elektrischen/elektronischen Installationsgeräte unangetastet, da das Funktionsmodul zum Einbau hinter ein bestehendes elektrisches/elektronisches Installationsgerät der Gebäudeinstallationstechnik ausgebildet ist. Damit wird der optisch unschöne Eindruck vermieden, dass lediglich solche elektrische/elektronische Installationsgeräte getauscht werden, die bezüglich der Netzstabilisierung und/oder Nutzung eines Niedertarifstromtarifs eingebunden werden sollen. Damit ist auf geschickte Art und Weise die Implementierung der erfindungsgemäß erreichten Netzstabilisierung und/oder Nutzung eines Niedertarifstromtarifs von bereits verbauten Schaltern, Tastern oder Steckdosen entkoppelt.

Gemäß einer alternativen bevorzugten Ausgestaltung des erfindungsgemäßen elektrischen/elektronischen Installationsgerätes ist dieses eine Steckdose, dessen die Steuereinheit zur Lastregelung ein Relais umfasst. Bei einer solchen Ausgestaltung des erfindungsgemäßen elektrischen/elektronischen Installationsgerätes ist besonders vorteilhaft, dass die Installation besonders einfach ist, da der Schritt einer Nachrüstung entfällt und auch der Schritt einer Zuordnung eines Verbrauchers entfällt, da durch die Steckdose unmittelbar eine beliebige Last, beispielsweise eine Waschmaschine, ein Trockner, ein Geschirrspüler oder ein Kühl-/Gefrierschrank, betrieben wird.

In einer weiteren Ausgestaltung des erfindungsgemäßen elektrischen/elektronischen Installationsgerätes umfasst dieses eine Sende- und/oder Empfangseinheit, insbesondere einen Funksender-und/oder Empfänger, durch die es mit einem elektrischen Gerät, insbesondere einem mobilen Endgerät oder einem Gateway, kommuniziert. Dabei ist es besonders vorteilhaft, dass die Kommunikation mit dem Gateway es erlaubt, weitere elektrische/elektronische Installationsgeräte in die Laststeuerung einzubeziehen. Auch eröffnet die Kommunikation via Endgerät eine einfache, komfortable Konfiguration bezüglich der Parameter im Kontext der Netzstabilisierung und/oder Nutzung eines Niedertarifstromtarifs.

In einer wartungsfreien Ausführungsform des erfindungsgemäßen elektrischen/elektronischen Installationsgerätes ist das elektrische/elektronische Installationsgerät netzspannungsversorgt.

In einer alternativen Ausführungsform des erfindungsgemäßen elektrischen/elektronischen Installationsgerätes ist das elektrische/elektronische Installationsgerät, insbesondere das Funktionsmodul, energiespeicherversorgt. Eine solche Versorgung, beispielweise durch eine Batterie oder einen Akkumulator, bietet den Vorteil, dass der Einbauaufwand beziehungsweise Platzbedarf abgesenkt wird.

In einer weiteren Ausgestaltung des erfindungsgemäßen elektrischen/elektronischen Installationsgerätes umfasst dieses eine Anzeige- und/oder Vorortbedieneinrichtung, durch die die Lastregelung zur Netzstabilisierung und/oder Nutzung eines Niedertarifstromtarifs konfiguriert werden kann.

Des Weiteren betrifft die Erfindung ein System umfassend ein erfindungsgemäßes elektrisches/elektronisches Installationsgerät und eine Eingabeeinheit, insbesondere eine Applikation auf einem mobilen Endgerät, wobei die Eingabeeinheit dazu geeignet ist, die Lastregelung zu konfigurieren, insbesondere bezüglich der Aktivierung der Lastregelung mit Blick auf die Netzstabilisierung und/oder Nutzung eines Niedertarifstromtarifs. Durch ein solches System wird der Komfort zur Einstellung der Parameter bezüglich der Lastregelung mit Blick auf die Netzstabilisierung und/oder Nutzung eines Niedertarifstromtarifs besonders erhöht. Dabei ist es besonders vorteilhaft, an einem solchen erfindungsgemäßen System, wenn die Aktivierung der Lastregelung mit Blick auf die Netzstabilisierung und/oder Nutzung eines Niedertarifstromtarifs uhrzeit- und/oder tagabhängig erfolgt. Damit lässt sich die Lastregelung mit Blick auf die Netzstabilisierung und/oder Nutzung eines Niedertarifstromtarifs komfortabel und effektiv einstellen.

Die Erfindung betrifft ferner ein Verfahren zur Netzstabilisierung und/oder Nutzung eines Niedertarifstromtarifs mit einem erfindungsgemäßen elektrischen/elektronischen Installationsgerät umfassend die Schritte:
- Konfigurieren der Lastregelung zur Netzstabilisierung und/oder Nutzung eines Niedertarifstromtarifs,
- Empfangen und Auswerten eines Rundsteuersignals mit der Rundsteuersignalauswerteinheit des elektrischen/elektronischen Installationsgerätes,
- Lastregeln mittels der Steuereinheit mindestens eines an das elektrische/elektronische Installationsgerät angeschlossenen Verbrauchers in Abhängigkeit von dem empfangenen und ausgewerteten Rundsteuersignal.

Mit diesem Verfahren werden dieselben Vorteile wie durch das erfindungsgemäße elektrische/elektronische Installationsgerät erreicht.

Gemäß einer Weiterbildung dieses erfindungsgemäßen Verfahrens umfasst das Konfigurieren der Lastregelung die Vorgabe eines Zeitfensters, in der die Lastregelung aktiviert ist.

Nachfolgend ist die Erfindung unter Bezugnahme auf die beigefügten Figuren anhand eines Ausführungsbeispiels beschrieben. Es zeigen:
- **Fig.** 1:: eine perspektivische Darstellung einer Ausgestaltung des erfindungsgemäßen elektrischen/elektronischen Installationsgerätes, und
- Fig. 2:: eine perspektivische Explosions-Darstellung einer Ausgestaltung des erfindungsgemäßen elektrischen/elektronischen Installationsgerätes gemäß Fig. 1.

In den verschiedenen Figuren sind gleiche Teile stets mit den gleichen Bezugszeichen versehen und werden daher in der Regel auch jeweils nur einmal benannt beziehungsweise erwähnt.

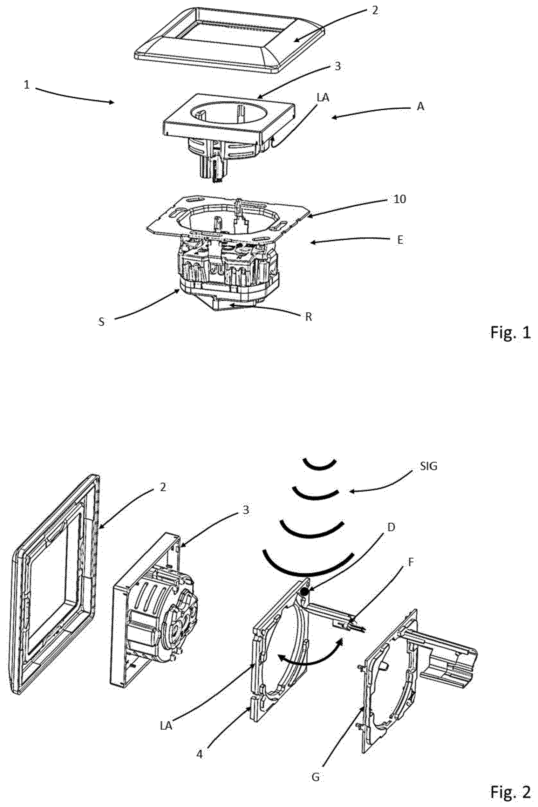

Das in Figur 1 perspektivisch dargestellte erfindungsgemäße elektrische/elektronische Installationsgerät 1, welches vorliegend als Steckdose ausgebildet ist, umfasst einen Aufsatz A und einen Einsatz E.

Der Aufsatz A umfasst neben einem Designrahmen 2 ein Zentralstück 3 sowie eine optionale Leiterplatte im Aufsatz LA. Auf dieser Leiterplatte LA ist vorliegend eine Rundsteuersignalauswerteinheit D angeordnet. Eine solche Rundsteuersignalauswerteinheit D kann ein Rundsteuersignal SIG empfangen, auswerten und die Lastregelung über die Steuereinheit R beeinflussen.

Der Einsatz E umfasst ein Sockelteil S, welches an eine Spannungsversorgungseinheit anschließbar ist. Das Sockelteil S stellt gleichzeitig ein Gehäuseoberteil dar, welches zusammen mit einem Gehäuseunterteil ein Gehäuse für die eine Steuereinheit R zur Lastregelung mindestens eines, an das elektrische/elektronische Installationsgerät 1 angeschlossenen Verbrauchers aufweist. Der Tragring 4 des Einsatzes E dient neben dem Festlegen an beziehungsweise in einer Installationsdose zur Aufnahme des Zentralstücks 3 über Rastmittel.

Alternativ zu der dargestellten Ausführungsform kann die Rundsteuersignalauswerteinheit D auch auf einer Leiterplatte im Einsatz E angeordnet sein. Die Anordnung im Aufsatz A geht jedoch mit einer besseren Empfangsqualität des Rundsteuersignals SIG einher. Dieser Aspekt stellt einen großen Vorteil in massiven Wänden von Gebäuden dar, da mit zunehmender Installationstiefe die Empfangsqualität spürbar abnimmt. Somit ist bei der dargestellten Anordnung der Rundsteuersignalauswerteinheit D auf der Leiterplatte LA im Aufsatz A eine optimale Empfangsqualität sichergestellt.

Figur 2 zeigt eine perspektivische Explosions-Darstellung einer Ausgestaltung des erfindungsgemäßen elektrischen/elektronischen Installationsgerätes 1 gemäß Figur 1. Dabei ist erkennbar, dass die Leiterplatte LA einen flexiblen Leiterplattenabschnitt F aufweist, der aufgenommen in ein Gehäuse G in die Zentralplatte 3 aufzunehmen ist und eine elektrische Verbindung zum Sockelteil S, insbesondere zur Steuereinheit R, herstellt. Hierdurch wird es auf geschickte Weise ermöglicht, die Position der Rundsteuersignalauswerteinheit D so weit wie möglich nach vorne zu verlagern, so dass die Empfangsqualität bezüglich des schematisch eingezeichneten Rundsteuersignals SIG optimiert wird.

Die Erfindung ist anhand von einem Ausführungsbeispiel beschrieben. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen im Einzelnen erläutert werden müsste.

### Bezugszeichenliste

- 1: elektrisches/elektronisches Installationsgerät
- 2: Designrahmen
- 3: Zentralstück
- 4: Tragring

- A: Aufsatz
- D: Rundsteuersignalauswerteinheit
- E: Einsatz
- F: flexibler Leiterplattenabschnitt
- G: Gehäuse
- LA: Leiterplatte des Aufsatzes
- R: Steuereinheit
- S: Sockelteil
- SIG: Rundsteuersignal

## Patentansprüche

1. Elektrisches/elektronisches Installationsgerät (1) der Gebäudeinstallationstechnik zum Einbau in eine Installationsdose zur Netzstabilisierung und/oder Nutzung eines Niedertarifstromtarifs, wobei das elektrische/elektronische Installationsgerät (1) eine Rundsteuersignalauswerteinheit (D) und eine Steuereinheit (R) zur Lastregelung mindestens eines an das elektrische/elektronische Installationsgerät (1) angeschlossenen Verbrauchers aufweist, wobei die Lastregelung anhand eines durch die Rundsteuersignalauswerteinheit (D) empfangenen und ausgewerteten Rundsteuersignals (SIG) erfolgt.

2. Elektrisches/elektronisches Installationsgerät (1) nach Anspruch 1, **dadurch gekennzeichnet, dass** das elektrische/elektronische Installationsgerät (1) ein Funktionsmodul zum Einbau hinter ein bestehendes elektrisches/elektronisches Installationsgerät (1) der Gebäudeinstallationstechnik, insbesondere ein Schalter, Taster oder eine Steckdose, ist.

3. Elektrisches/elektronisches Installationsgerät nach Anspruch 1, **dadurch gekennzeichnet, dass** das elektrische/elektronische Installationsgerät (1) eine Steckdose ist und die Steuereinheit (R) zur Lastregelung ein Relais umfasst.

4. Elektrisches/elektronisches Installationsgerät nach einem der Ansprüche 1 bis 3, **dadurch gekennzeichnet, dass** das elektrische/elektronische Installationsgerät (1) eine Sende-und/oder Empfangseinheit, insbesondere einen Funksender-und/oder Empfänger, aufweist, durch die es mit einem elektrischen Gerät, insbesondere einem mobilen Endgerät oder einem Gateway, kommuniziert.

5. Elektrisches/elektronisches Installationsgerät nach einem der Ansprüche 1 bis 4, **dadurch gekennzeichnet, dass** das elektrische/elektronische Installationsgerät (1) netzspannungsversorgt ist.

6. Elektrisches/elektronisches Installationsgerät nach einem der Ansprüche 1 bis 4, **dadurch gekennzeichnet, dass** das elektrische/elektronische Installationsgerät energiespeicherversorgt ist.

7. Elektrisches/elektronisches Installationsgerät nach einem der Ansprüche 1 bis 6, **dadurch gekennzeichnet, dass** das elektrische/elektronische Installationsgerät (1) eine Anzeige-und/oder Vorortbedieneinrichtung aufweist, durch die die Lastregelung zur Netzstabilisierung und/oder Nutzung eines Niedertarifstromtarifs konfiguriert werden kann.

8. System umfassend ein elektrisches/elektronisches Installationsgerät (1) nach einem der vorstehenden Ansprüche und eine Eingabeeinheit, insbesondere eine Applikation auf einem mobilen Endgerät, wobei die Eingabeeinheit dazu geeignet ist, die Lastregelung zu konfigurieren, insbesondere bezüglich der Aktivierung der Lastregelung mit Blick auf die Netzstabilisierung und/oder Nutzung eines Niedertarifstromtarifs, insbesondere uhrzeit- und/oder tagabhängig.

9. Verfahren zur Netzstabilisierung und/oder Nutzung eines Niedertarifstromtarifs mit einem elektrischen/elektronischen Installationsgerät (1) der vorstehenden Ansprüche 1 bis 7 umfassend die Schritte:
- Konfigurieren der Lastregelung zur Netzstabilisierung und/oder Nutzung eines Niedertarifstromtarifs,
- Empfangen und Auswerten eines Rundsteuersignals (SIG) mit der Rundsteuersignalauswerteinheit (D) des elektrischen/elektronischen Installationsgerätes (1),
- Lastregeln mittels der Steuereinheit (R) mindestens eines an das elektrische/elektronische Installationsgerät (1) angeschlossenen Verbrauchers in Abhängigkeit von dem empfangenen und ausgewerteten Rundsteuersignal (SIG).

10. Verfahren nach Anspruch 9, **dadurch gekennzeichnet, dass** das Konfigurieren der Lastregelung die Vorgabe eines Zeitfensters umfasst, in der die Lastregelung aktiviert ist.
